# EUROPEAN PATENT SPECIFICATION

(11) **EP 4 127 504 B1**
(45) Date of publication and mention of the grant of the patent: **30.09.2026**
(21) Application number: 20934612.1
(22) Date of filing: 31.07.2020
(51) Int. Cl.: F16D 65/12

(54) **COMMERCIAL VEHICLE BRAKE ROTOR**
NUTZFAHRZEUGBREMSROTOR
DISQUE DE FREIN DE VÉHICULE UTILITAIRE

(30) Priority: 05.05.2020 US 202063020209 P
(43) Date of publication of application: 08.02.2023
(73) Proprietor: Consolidated Metco, Inc., Vancouver, WA 98661 (US)
(72) Inventor: PILEGGI, William, Portland, Oregon 97229 (US); TORSTVEIT, Sven, Vancouver, WA 98682 (US); HIDALGO, Ben, Portland, Oregon 97229 (US)
(74) Representative: Dehns
(86) International application number: PCT/US2020/044384
(87) International publication number: WO 2021/225613

(56) References cited:
- EP-A1- 0 127 932
- WO-A1-02/090791
- DE-A1- 102013 226 333
- US-A- 2 800 982
- US-A- 6 098 764
- US-A1- 2005 269 173
- US-A1- 2005 269 173
- US-A1- 2007 199 778
- US-A1- 2007 199 778
- US-A1- 2012 247 881

## Description

### FIELD

This disclosure relates to brake rotors for commercial vehicles and, more specifically, to vented brake rotors for commercial vehicles.

### BACKGROUND

Brake rotors for commercial vehicles are subject to high torque loads and high temperatures during braking operations. Commercial vehicles are typically vehicles having a gross vehicle weight classification between 5 and 8 and equipped with an air or hydraulic brake system. To compensate for the high torque loads, brake rotors for commercial vehicles typically have geometries and materials that permit the brake rotors to have greater rigidity than brake rotors used for passenger vehicles. The brake rotors of commercial vehicles may also be vented to provide airflow through the rotating brake rotor and cool the brake rotor after a braking operation. A vented commercial vehicle brake rotor may be less rigid than similarly sized brake rotor without vents due to the void spaces in the brake rotor required to form the vents. The improvement in heat transfer provided by vents of a commercial vehicle brake rotor for a particular application may therefore be limited by the corresponding reduction in rigidity of the brake rotor. Further, the geometry of vented brake rotors may cause the vented brake rotors to be subject to two types of high temperature-related failures.

The first type of high temperature-related failure is a thermal shock failure wherein the brake rotor experiences a sudden and substantial increase in temperature, such as a brake caliper locking onto the brake rotor and the vehicle continuing to drive. The temperature at the braking surface of the brake rotor may spike beyond normal operating temperatures. Due to the sudden nature of the thermal shock event, the mounting flange of the brake rotor may be at ambient temperature while the braking surface is at an extremely high temperature. The temperature differential between the braking surface and the mounting flange may cause the brake rotor to bend. The bending of the brake rotor may form cracks near bolt holes of the brake rotor mounting flange that propagate outward from the bolt holes.

Another type of high temperature-related failure of commercial vehicle brake rotors is thermal cycling failure wherein the brake rotor repeatedly heats up during a braking operation and cools down after the braking operation. Some known vented brake rotors have a geometry that causes inboard and outboard sides of the brake rotor to expand and contract at different rates in response to thermal cycling of the brake rotor. The different expansion and contraction rates for the inboard and outboard sides of the brake rotor bends the brake rotor and encourages surface crack propagation along the brake rotor and eventual failure of the brake rotor. The strength required for a commercial vehicle brake rotor and the packaging considerations of the positioning of the brake rotor on a wheel end of a commercial vehicle may make it difficult to address both types of high temperature-related failures that may be experienced by commercial vehicle brake rotors.

WO 02/090791 A1 discloses a brake disc rotor having a central hat co-axial with surrounding rings which form brake bands for engagement with brake pads. The rings are supported in a spaced apart parallel configuration with channels there between whereby in use of the rotor cooling air is drawn in through vent means formed around the inner periphery of the rings and then radially outwardly through the channels as the rotor turns. The vent means include inlet vent ports on the outboard side of the rotor.

US 2012/247881 A1 discloses a brake hub assembly including a brake hub and a brake disk having a first brake surface, a second brake surface spaced axially from the first brake surface, and a plurality of ribs extending between the first and second brake surfaces. Where the brake hub is thermally isolated from the brake hub by various combinations of spacers, torque pins, torque lugs, and the like.

US 2005/269173 A1 discloses an apparatus for controlling the coning in a brake rotor in which the brake rotor comprises a central rotor portion, a first set of mounting members connected to the central rotor portion and an inboard friction section and a second set of mounting members connected to the central rotor portion and an outboard friction section where the inboard and outboard friction sections are connected by a plurality of air directing structures.

### SUMMARY

The present invention provides a commercial vehicle brake rotor as claimed in claim 1.

The present invention provides a commercial vehicle brake rotor as claimed in claim 9.

In another aspect, The present invention provides a commercial vehicle wheel end assembly as claimed in claim 13.

### BRIEF DESCRIPTION OF THE DRAWINGS

FIG. 1 is a perspective view of a wheel end assembly including a brake rotor and a wheel hub;
FIG. 2 is an exploded view of the wheel end assembly of FIG. 1 showing a central mounting flange of the brake rotor having through openings that receive studs of the wheel hub;
FIG. 3 is a plan view of an inboard side of the brake rotor of FIG. 2 showing the through openings of the brake rotor alternating with ABS tone ring mounting bosses of the brake rotor around the brake rotor;
FIG. 4 is a perspective view of a portion of the brake rotor taken generally at line 4-4 in FIG. 3 showing an inboard air inlet of the brake rotor that is in communication with internal vents of the brake rotor;
FIG. 5 is a plan view of an outboard side of the brake rotor of FIG. 2;
FIG. 6 is a perspective view of a portion of a brake rotor taken generally at line 6-6 in FIG. 5 showing outboard air inlets that are in communication with the vents of the brake rotor and chamfers near the outboard air inlets that permit air flow into the outboard air inlets;
FIG. 7A is a cross-sectional view taken across line 7A-7A in FIG. 3 showing outboard connecting portions of the brake rotor connecting the mounting flange to an outboard braking portion of the brake rotor;
FIG. 7B is an enlarged view of the area shown in the dashed circle of FIG. 7A;
FIG. 8A is a cross-sectional view taken across line 8A-8A in FIG. 3 showing inboard connecting portions of the brake rotor connecting the mounting flange to an inboard braking portion of the brake rotor;
FIG. 8B is an enlarged view of the area shown in the dashed circle of FIG. 8B;
FIG. 8C is a cross-sectional view taken across line 8C-8C in FIG. 3 showing a radial connecting portion connecting the mounting flange to the inboard and outboard braking portions;
FIG. 9 is a side elevational view of the brake rotor of FIG. 2 showing the inboard and outboard braking portions of the brake rotor separated by vanes of the brake rotor;
FIG. 10 is a cross-sectional view taken across line 10-10 in FIG. 9 showing airflow paths from one of the outboard air inlets extending radially outward through vents of the brake rotor;
FIG. 11 is a cross-sectional view taken across line 11-11 in FIG. 9 showing an alternating arrangement of radial portions of the outboard and inboard connecting portions around the brake rotor;
FIG. 12 is a cross-sectional view taken across line 12-12 in FIG. 9 showing airflow paths from one of the inboard air inlets extending radially outward through vents of the brake rotor;
FIG. 13 is a cross-sectional view of another brake rotor showing recesses on an inboard side of the brake rotor opposite outboard air inlets of the brake rotor;
FIG. 14 is a plan view of an inboard side of another brake rotor showing nut seats of the mounting flange of the brake rotor having an alternating arrangement with ABS tone ring mounting bosses of the mounting flange; and
FIG. 15 is a cross-sectional view of the brake rotor of FIG. 14 showing internal vanes of the brake rotor.
FIG. 16 is a cross-sectional view of another brake rotor showing narrowed internal vanes of the brake rotor;
FIG. 17 is a cross-sectional view of another brake rotor showing internal pin vanes of the brake rotor;
FIG. 18 is a perspective view of another brake rotor showing bosses alternating with through openings about a mounting flange of the brake rotor;
FIG. 19 is a cross-sectional view taken across line 19-19 in FIG. 18 showing an inboard connecting portion of the brake rotor that connects the mounting flange to an inboard braking surface of the brake rotor.

### DETAILED DESCRIPTION

In one aspect of the present disclosure, a commercial vehicle brake rotor is provided that includes a unitary, one-piece annular body including vents. The annular body includes a central mounting portion, an inboard braking portion, and an outboard braking portion. The annular body includes a plurality of outboard connecting portions connecting the outboard braking portion and the central mounting portion, the outboard connecting portions extending outboard from the central mounting portion to the outboard braking portion. The annular body has inboard air inlets intermediate the outboard connecting portions and the inboard braking portion. The inboard air inlets are in communication with the vents to permit air to flow into the vents from an inboard side of the annular body. The annular body further includes a plurality of inboard connecting portions connecting the inboard braking portion and the central mounting portion, the inboard connecting portions extending inboard from the central mounting portion to the inboard braking portion. The annular body also has outboard air inlets intermediate the inboard connecting portions and the outboard braking portion. The outboard air inlets are in communication with the vents to permit air to flow into the vents from an outboard side of the annular body. The outboard and inboard connecting portions provide symmetry in the thermal expansion and contraction of the annular body so that the annular body is limited to radial expansion and contraction rather than bending. In this manner, the outboard and inboard connecting portions improve the robustness of the commercial vehicle brake rotor by limiting temperature-induced bending of the annular body which in turn limits surface crack propagation along the annular body.

According to the invention, the outboard and inboard connecting portions alternate about the annular body. The alternating outboard and inboard connecting portions contribute to the rigidity of the annular body. Further, the alternating outboard and inboard connecting portions contribute to symmetrical thermal expansion and contraction of the annular body about a midline of the annular body.

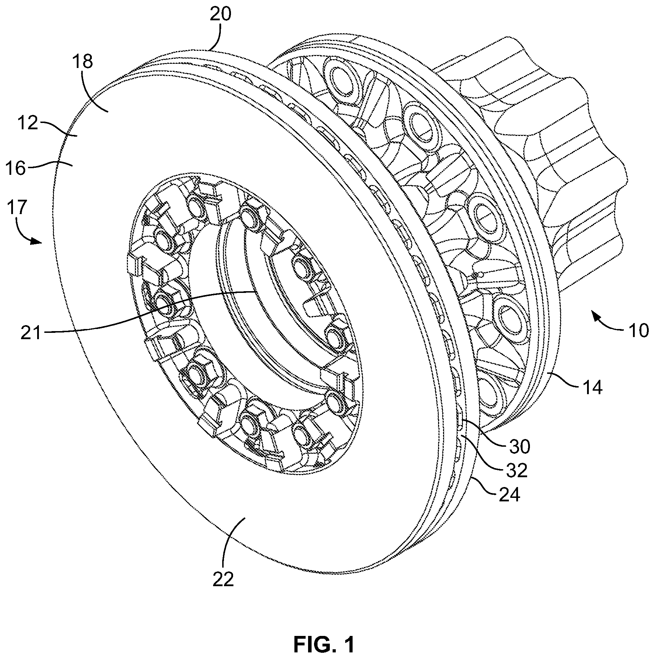

Regarding FIG. 1, a wheel end assembly 10 is provided that includes a brake rotor 12 connected to a wheel hub 14. The wheel end assembly 10 has an opening 21 for receiving a vehicle spindle and the wheel end assembly 10 is configured to rotate around the vehicle spindle. The wheel hub 14 may include various components for rotatably securing the wheel end assembly 10 to the vehicle spindle such as bearings, a spacer, and a spindle lock nut which are not shown for clarity purposes. The brake rotor 12 has a body 16 with a braking portion 17 including an inboard braking portion 18 and an outboard braking portion 20. The inboard braking portion has an inboard braking surface 22 and the outboard braking portion 20 has an outboard braking surface 24. The inboard and outboard braking surfaces 22, 24 are frictionally engaged by pads of a brake caliper of the commercial vehicle to slow turning of the wheel end assembly 10. The brake rotor 12 further includes vanes 30 extending between the inboard and outboard braking portions 18, 20 that cooperate with the inboard and outboard braking portions 18, 20 to form vents 32. The vents 32 permit airflow between the inboard and outboard braking portions 18, 20 to cool the brake 12 during and after a braking operation.

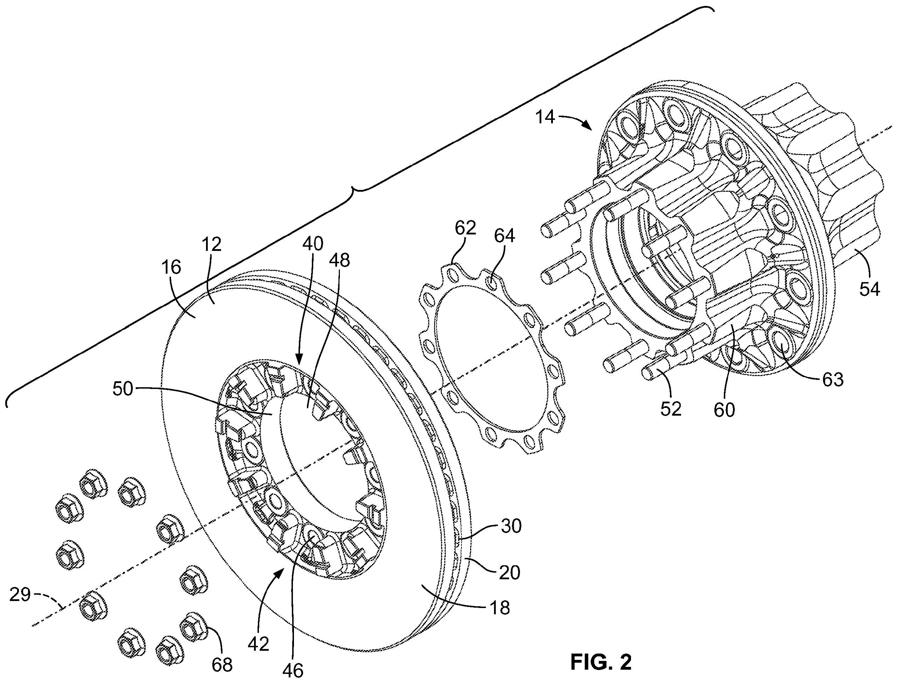

Regarding FIG. 2, the body 16 of the brake rotor 12 includes a central mounting portion, such as a mounting flange 40, and a transition portion 42 connecting the mounting flange 40 to the inboard and outboard braking portions 18, 20. The mounting flange 40 includes through openings 46 for receiving studs 52 of the wheel hub 14, a central opening 48, and an annular inner surface 50. The wheel hub 14 includes a body 54 supporting the studs 52 and a tubular portion 60. The wheel hub body 54 may also include openings 63 that receive fasteners such as bolts to connect a rim and tire assembly of a wheel.

In some embodiments, the wheel end assembly 10 includes an insulator 62 that resists heat transfer between the brake rotor 12 and the wheel hub 14. The insulator 62 has openings 64 that receive the studs 52 of the wheel hub 14 and is sandwiched between the wheel hub body 54 and the brake rotor mounting flange 40. The wheel end assembly 10 may further include nuts 68 that are threadingly engaged with distal portions of the studs 52 to secure the brake rotor 12 to the wheel hub 14.

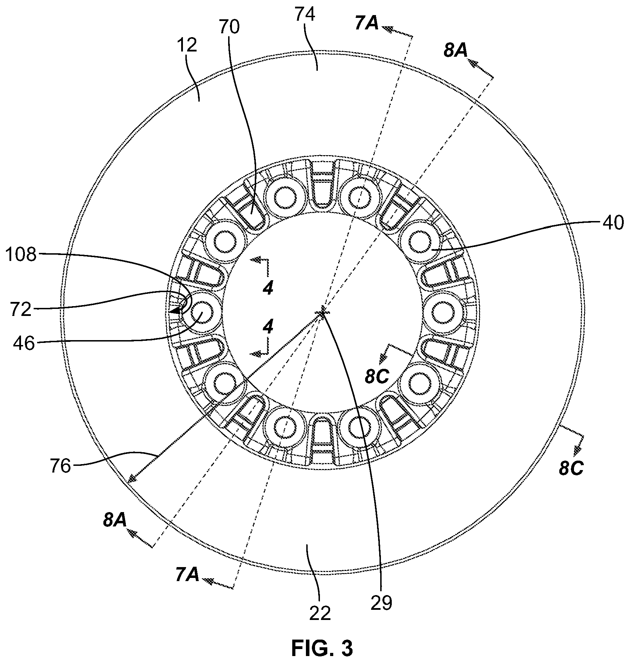

Regarding FIG. 3, the body 16 has an annular configuration extending about a central axis 29. The mounting flange 40 includes bosses, such as ABS tone ring mounting portions. In one embodiment, the ABS tone ring mounting portions include ABS tone ring mounting bosses 70, that alternate with the through openings 46 around the mounting flange 40. The ABS tone ring mounting bosses 70 include one or more portions for connecting to an ABS tone ring, such as a groove 71 that receives a portion of a tone ring and a pocket 73 that receives a retaining ring. The retaining ring may snap into the pocket 73 and maintains the ABS tone ring secured to the ABS tone ring mounting bosses 70.

The brake rotor 12 includes inboard air inlets 72 that permit airflow to flow from an inboard side 74 of the brake rotor 12 and into the vents 32. The inboard air inlets 72 are outboard of or recessed from the inboard braking surface 22. In one embodiment, the inboard air inlets 72 are radially aligned with the through openings 46 of the mounting flange 40. As used herein, the term radially aligned is intended to encompass components that have at least a portion overlapping along a radius (e.g., radius 76) drawn from the central axis 29. Similarly, the term axially aligned is intended to encompass components that have at least a portion overlapping along the central axis 29.

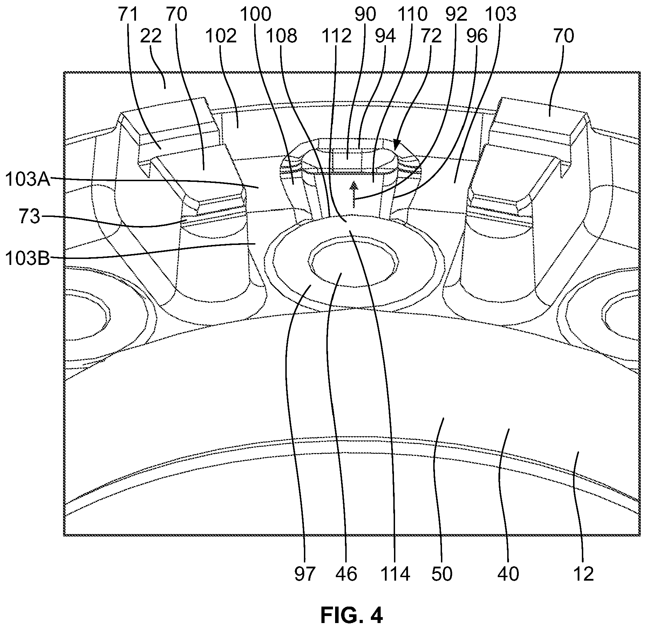

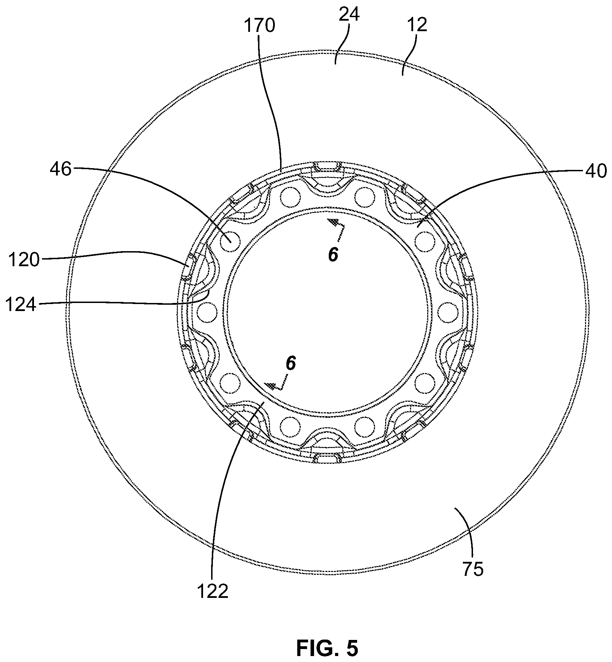

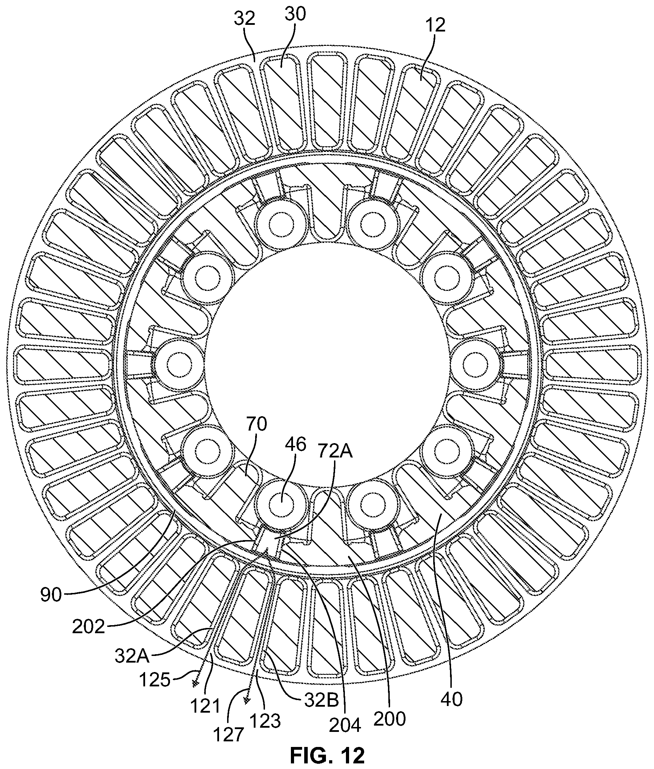

Regarding FIGS. 4 and 12, the brake rotor 12 includes an interior, annular channel 90 intermediate the inboard air inlet 72 and the vents 32. The annular channel 90 operates as a manifold to distribute air from the inboard air inlets 72 and outboard air inlets 120 (see FIG. 5) of the brake rotor 12 to the vents 32. As shown in FIG. 12, during rotation of the brake rotor 12, air may enter the inboard air inlet 72A, travel into the channel 90, into vents 32A, 32B, and through vent outlets 121, 123 along paths 125, 127. The airflow cools the inboard and outboard braking portions 18, 20 of the brake rotor 12 as the airflow travels along the paths 125, 127. The brake rotor 12 may be mounted to rotate in either direction and produce similar airflow through the brake rotor 12.

Regarding FIG. 4, air may enter the inboard air inlet 72 generally in direction 92 and travel into the channel 90. The inboard air inlet 72 includes an opening 94 and may include a groove 96 that leads into the opening 94. The mounting flange 40 includes a nut seat 97 which may include, for example, a flat annular surface against which an outboard surface of one of the nuts 68 may seat against. The inboard air inlet 72 may also include a chamfer 100 about the opening 94 that smooths the transition between a sidewall portion 102 of the inboard braking portion 18 and the opening 94. The groove 96 and chamfer 100 provide a geometry for guiding air into the opening 94 while minimizing stress rises in the brake rotor 12 near the inboard air inlet 72.

Regarding FIG. 3 and 4, the groove 96 removes material radially outward from the nut seat 97 and forms a step 108 that transitions from the nut seat 97 to a floor surface 110 of the groove 96. The step 108 reduces the thickness of the body 16 radially outward from the nut seat 97. The reduced thickness of the body 16 radially outward from the nut seat 97 creates a low stress portion 112 radially outward from the through opening 46. In the event that a surface crack forms at a surface portion 114, the low stress portion 112 inhibits the stress fracture from propagating radially outward. In this manner, the body air inboard inlet 72 and associated geometry helps improve the robustness of the brake rotor 12.

Regarding FIG. 4, the brake rotor 12 may have radii 103A on opposite sides of each inboard air inlet 72. Each radius 103A connects an inboard surface portion 103B to the sidewall portion 102. There may be a radius 103A on either side of each ABS tone ring mounting boss 70 which contributes to the rigidity of the inboard braking portion 18 relative to the mounting flange 40.

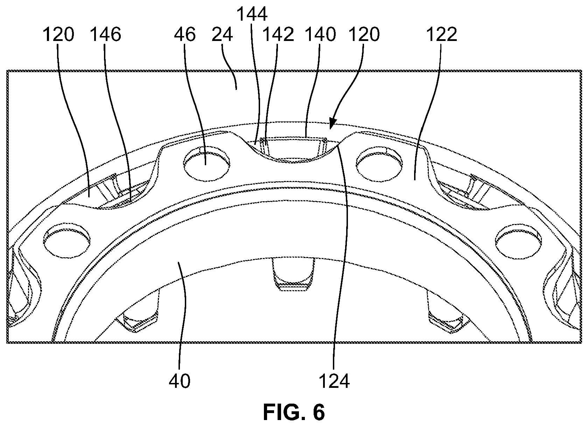

Regarding FIGS. 5 and 6, the outboard air inlets 120 of the brake rotor 12 are shown on the outboard side 75 of the brake rotor 12. The outboard air inlets 120 are inboard of or recessed from outboard braking surface 24. The outboard air inlets 120 include openings 140 and tapered surfaces 142 that transition from a sidewall portion 144 of the brake rotor 12 into the opening 140. The mounting flange 40 includes an outboard surface 122 having a chamfer 124 that permits clearance for airflow to travel around an end of the tubular portion 60 of the wheel hub body 54 and into the outboard air inlet 120. The outboard air inlets 120 may also include floor surfaces 146 that direct airflow traveling along the chamfer 124 into the opening 140.

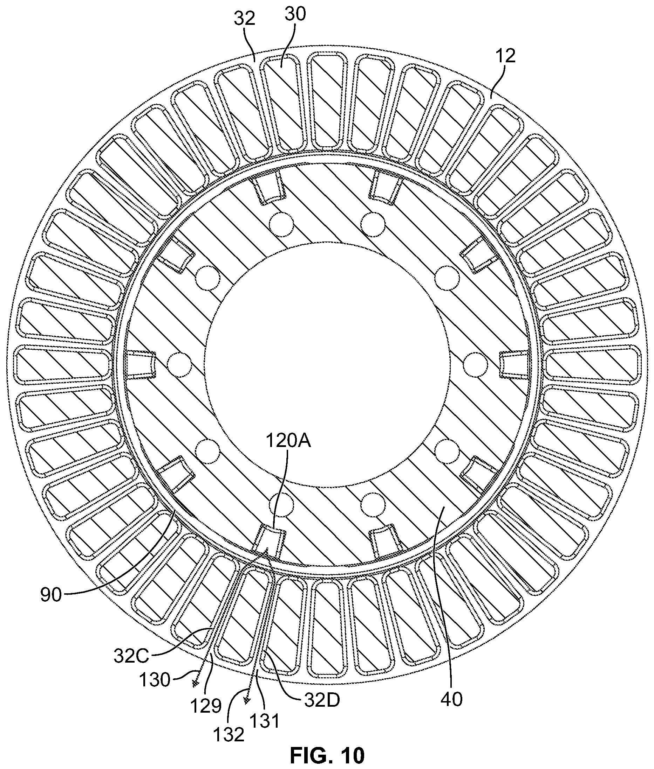

Regarding FIG. 10, during rotation of the brake rotor 12, air may flow into the outboard air inlet 120A, into the channel 90, into vents 32C, 32D, and outward through vent outlets 129, 131 along paths 130, 132. The airflow cools the inboard and outboard braking portions 18, 20 as the airflow travels along the paths 130, 132. The airflow that enters the inboard and outboard air inlets 72, 120 may intermingle in the channel 90 and the vents 32 and provide a more even airflow temperature within the brake rotor 12. The more even airflow temperature within the brake rotor 12 may limit localized high-temperature areas within the brake rotor 12 during braking operations.

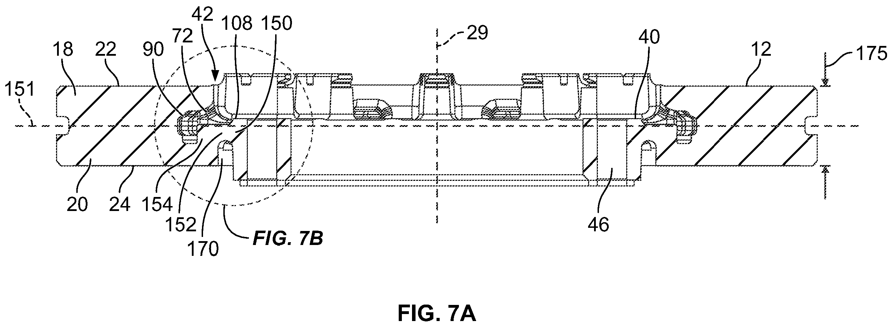

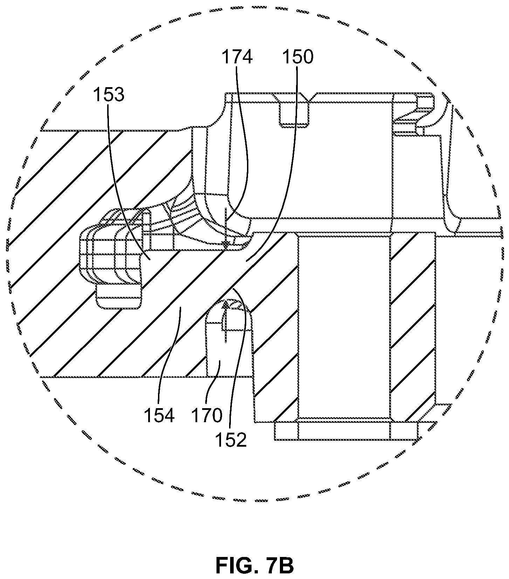

Regarding FIGS. 7A and 7B, the transition portion 42 of the brake rotor 12 includes an outboard connecting portion 150 connecting the mounting flange 40 to the outboard braking portion 20. The outboard connecting portion 150 intersects or is in proximity to a centerline or midline 151 of the brake rotor 12. In one embodiment, the outboard connecting portion 150 has a first portion, such as a radial portion 152 extending radially along the midline 151. The outboard connecting portion 150 further includes a second portion, such as a transverse portion 154 extending in an outboard direction along the central axis 29. The outboard connecting portion 150 includes an elbow portion 153 connecting the radial portion 152 and the transverse portion 154.

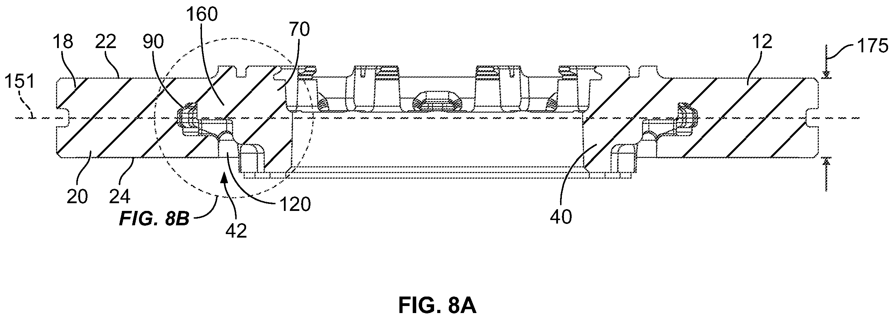

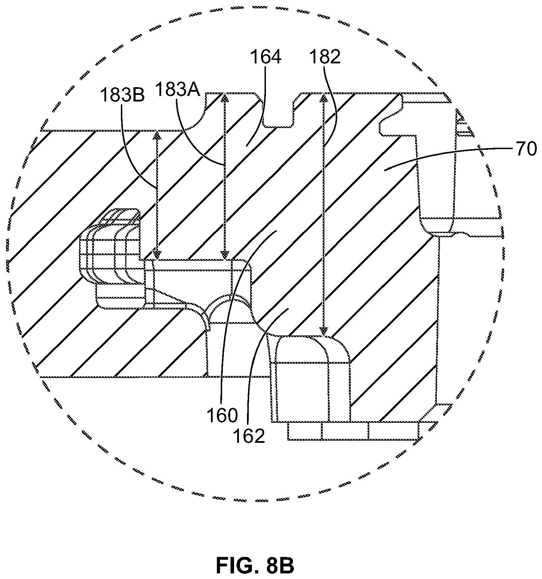

Regarding FIGS. 8A and 8B, the transition portion 42 of the brake rotor 12 also includes an inboard connecting portion 160 connecting the mounting flange 40 to the inboard braking portion 18. The inboard connecting portion 160 intersects or is in proximity to the midline 151. The inboard connecting portion 160 has a first portion such as a radial portion 162 including one of the ABS tone ring mounting bosses 70 and having a thickness 182. The inboard connecting portion 160 may further include a second portion such as a thinner radial portion 164 having thicknesses 183A, 183B.

The brake rotor 12 has outboard connecting portions 150 and inboard connecting portions 160 in an alternating arrangement around the brake rotor 12. The alternating outboard and inboard connecting portions 150, 160 provide a rigid construct to connect the inboard and outboard braking portions 18, 20 to the mounting flange 40. The alternating inboard and outboard connecting portions 150, 160 contribute to the brake rotor 12 being able to handle the high loads experienced by brake rotors of commercial vehicles.

Further, the alternating outboard and inboard connecting portions 150, 160 expand and contract at substantially similar rates such that the brake rotor 12 expands and contracts in the radial direction generally along the midline 151 rather than the inboard and outboard braking portions 18, 20 bending. Further, the alternating outboard and inboard connecting portions 150, 160 permit the expansion and contraction of each outboard connecting portion 150 to balance the expansion and contraction of the adjacent inboard connecting portions 160 and vice versa. This balancing of thermal expansion and contraction by the alternating outboard and inboard connecting portions 150, 160 further inhibits the bending of the inboard and outboard braking portions 18, 20 which could propagate surface cracks. In this manner, the brake rotor 12 is more resistant to propagation of surface cracks on the brake rotor 12 including the mounting flange 40.

Still further, the even stiffness of the brake rotor 12 between the inboard and outboard surfaces 22, 24 thereof provides predominately radial deflection or expansion in response to heating of the brake rotor 12 during a braking operation. The radial expansion maintains even contact between the outboard surfaces 22, 24 and the brake pads which, in turn, maintains an even heat input into the brake rotor 12. The even heat input to the brake rotor 12 contributes to the radial expansion of the brake rotor 12 rather than axial deflection. In this manner, the even stiffness of the brake rotor 12 between the inboard and outboard surfaces 22, 24 provides a positive feedback loop of a high ratio of radial expansion to axial deflection.

As an example, the outboard connector portion 150 and outboard braking portion 20 may expand radially outward at a first rate due to heat generated by a first caliper pad and the outboard braking surface 24. The inboard connecting portion 160 and the inboard braking portion 18 may expand radially outward at a second rate due to heat generated by a second caliper pad and the inboard braking surface 22. The first and second rates may be substantially similar, such as within ten percent or less of each other, such as five percent or less. The outboard connecting portion 150 and outboard braking portion 20 may contract radially inward at a third rate once the first caliper pad is removed from the outboard braking surface 24. The inboard connecting portion 160 may contract radially inward at a fourth rate once the second caliper pad is removed from the inboard braking surface 22. The third and fourth rates may be substantially similar, such as within ten percent or less of each other, such as five percent or less.

Regarding FIGS. 7A and 7B, the brake rotor 12 includes at least one recess 170 (see FIG. 5) opposite the inboard air inlets 72. In one embodiment, the recess 170 is annular and extends around the circumference of the mounting flange 40. The inboard air inlet 72 and recess 170 narrow the transition portion 42 such that the outboard connecting portion 150 has a thickness 174 that is less than half, such as less than a third, such as less than a quarter, of a thickness 175 of the brake rotor 12 measured between the inboard and outboard braking surfaces 22, 24.

Regarding FIG. 8B, the radial portion 162 of the inboard connecting portion 160 has a thickness 182 that may be greater than, less than, or equal to thickness 175 of the brake rotor 12 measured between the inboard and outboard braking surfaces 22, 24. The thickness 175 of the radial portion 162 including the height of the ABS tone ring mounting bosses 70 and the radius 103 (see FIG. 4) contribute to the stiffness of the connection between the inboard braking portion 18 and the mounting flange 40. In this manner, the outboard and inboard connecting portions 150, 160 may provide a robust connection between the mounting flange 40 and the inboard and outboard braking portions 18, 20 while resisting surface crack propagation in the brake rotor 12.

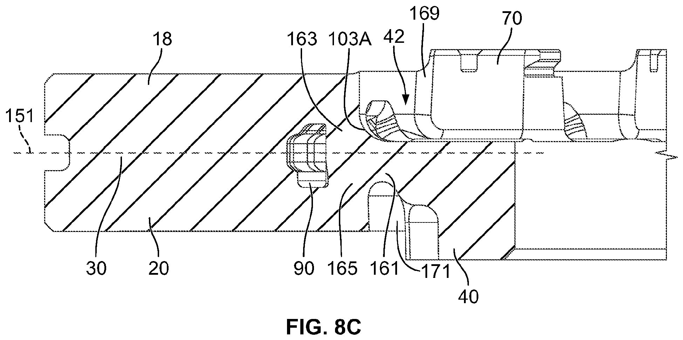

Regarding FIG. 8C, the transition portion 42 of the brake rotor 12 includes a radial connecting portion 161 extending radially along the midline 151 of the brake rotor 12. The radial connecting portion 161 connects the mounting flange 40 to the inboard and outboard braking portions 18, 20. In one embodiment, the radial connecting portion 161 connects to axially inboard extending portion 163 and axially outboard extending portion 165 of the braking portion 17. The radial connecting portion 161 and axially inboard and outboard extending portions 163, 165 form a T shape that provides rigidity to the brake rotor 12 along the midline 151. The brake rotor 12 has an outboard recess 171 in communication with the outboard air inlets 120 and axially aligned with an inboard recess 169. The recesses 169, 171 narrow the brake rotor 12 so that the radial connecting portion 161 is recessed from the inboard and outboard braking surfaces 22, 24.

Further, the brake rotor 12 has radial connecting portions 161 on opposite sides of each inboard connecting portion 160 (see FIG. 8A, 8B) that cooperate with the inboard connecting portion 160 to provide rigidity to the inboard side of the brake rotor 12. As shown in FIG. 8C, the radius 103A transitions between the radial connecting portion 161 and the inboard axially extending portion 163. The larger the radius 103A, the more rigidity the radial connecting portions 161 provides.

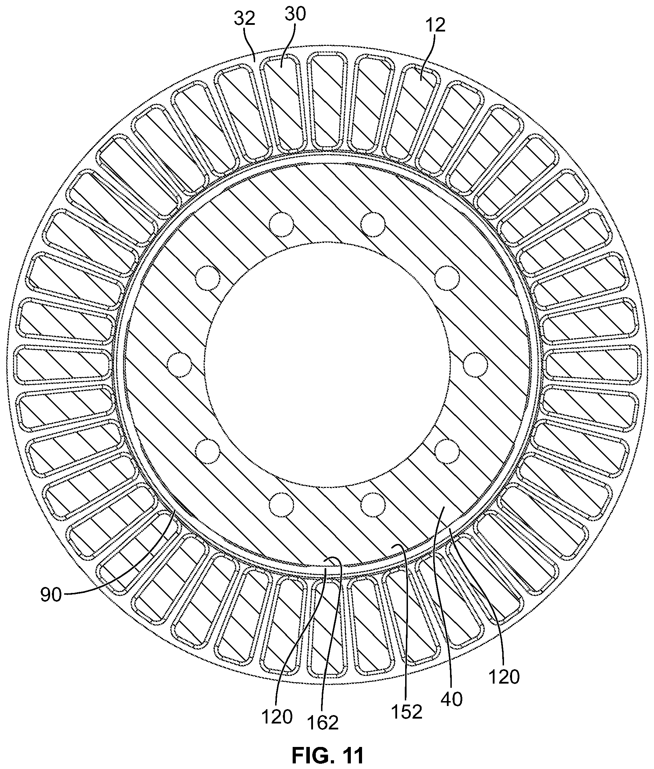

Regarding FIGS. 10-12, the outboard air inlet 120A permits airflow to travel in an inboard direction into the brake rotor 12 and into the channel 90. Regarding FIG. 11, the radial portion 162 of the inboard connecting portion 160 extends radially over and narrows the outboard air inlet 120 at a position above the cross section of FIG. 10. The radial portion 152 of the outboard connecting portions 150 alternates with the radial portions 162 of the inboard connecting portions 160 around the brake rotor 12.

Regarding FIG. 12, the ABS tone ring mounting bosses 70 have base portions 200 with side portions 202, 204 that form at least a portion of the inboard air inlets 72. Regarding FIGS. 10 and 12, the airflow from both inboard and outboard sides 74, 75 of the brake rotor 12 via the inboard and outboard air inlets 72, 120 provides airflow through the brake rotor 12 and heat transfer between the brake rotor 12 and the air.

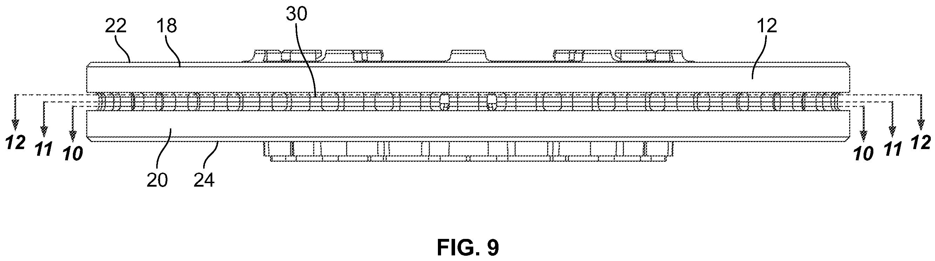

The brake rotor 12 may take a variety of forms. In one embodiment, the body 16 of the brake rotor 12 has a unitary, one-piece construction. The body 16 may include a metallic material such as cast iron, ceramic material, steel, and/or composite compacted graphite iron. In some other embodiments, the body 16 may be made of two or more components made of the same or different materials that are secured together such as by welding. Regarding FIGS. 9-12, the vanes 30 of the brake rotor are shown as being straight. The vanes 30 may have other configurations, such as curved.

The brake rotor 12 may be connected to the wheel hub 14 in a variety of approaches. In one embodiment, the mounting flange 40 may be connected to the wheel hub 14 using spring pins rather than studs and nuts.

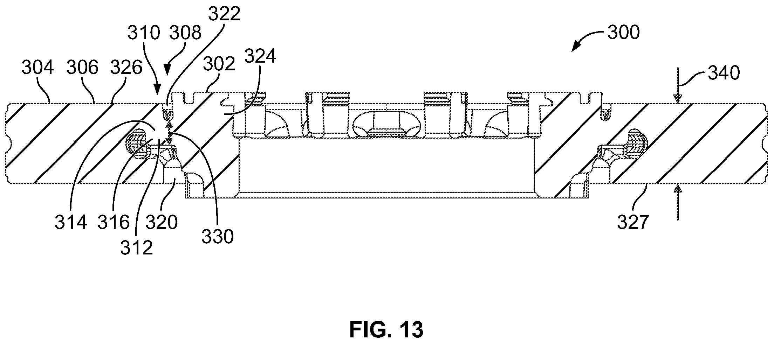

Regarding FIG. 13, a cross-section of another brake rotor 300 is provided. The brake rotor 300 is similar to the brake rotor 12 and includes a mounting flange 302, a braking portion 304 having an inboard braking portion 306, and a transition portion 308. The transition portion 308 includes an inboard connecting portion 310 connecting the mounting flange 302 to the inboard braking portion 306. The inboard connecting portion 310 includes a radial portion 312, a transverse portion 314, and an elbow portion 316 connecting the radial and transverse portions 312, 314. The brake rotor 300 includes outboard air inlets 320 and at least one recess 322 opposite the outboard air inlets 320. The recess 322 may be formed between each ABS tone ring mounting boss 324 and an inboard braking surface 326 of the brake rotor 300. The outboard air inlet 320 and recess 322 operate to narrow the transition portion 308 so that the inboard connecting portion 310 has a thickness 330 that is less than half, such as less than a third, such as less than a quarter, of a thickness 340 between the inboard braking surface 326 and an outboard braking surface 327.

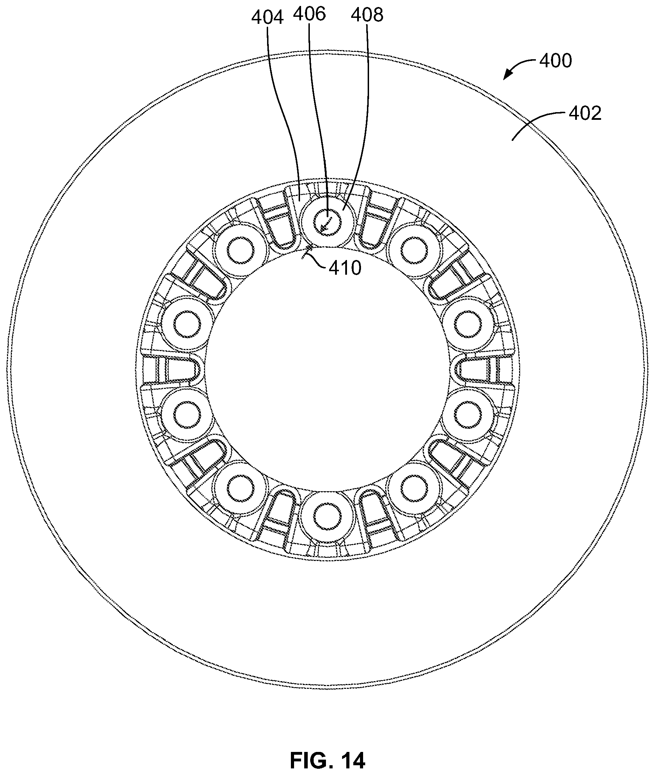

Regarding FIG. 14, a brake rotor 400 is provided that is similar in many respects to the brake rotor 12 discussed above. The brake rotor 400 includes a braking portion 402 and a mounting flange 404. The mounting flange 404 includes through openings 406 for receiving studs of a wheel hub and nut seats 408 extending about the through openings 406. The nut seats 408 have a radial thickness 410 that is larger than a corresponding radial thickness of the nut seats 97 (see FIG. 4) of the brake rotor 12. The larger radial thickness 410 may provide a larger nut seating area and compensate for variation in seated nut location that may occur due to variation in manufacturing and/or assembly.

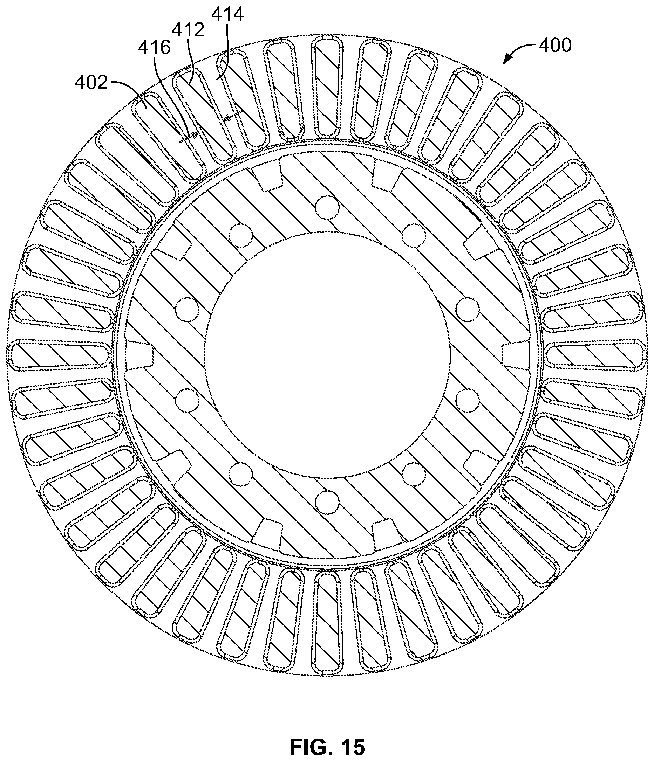

Regarding FIG. 15, the braking portion 402 of the brake rotor 400 includes vanes 412 and vents 414. The vanes 412 may have a width 416 that is less than a corresponding width of the vanes 30 (see FIG. 10) of the brake rotor 12. The narrower vanes 412 provide wider vents 414 which may be easier to manufacture in some applications.

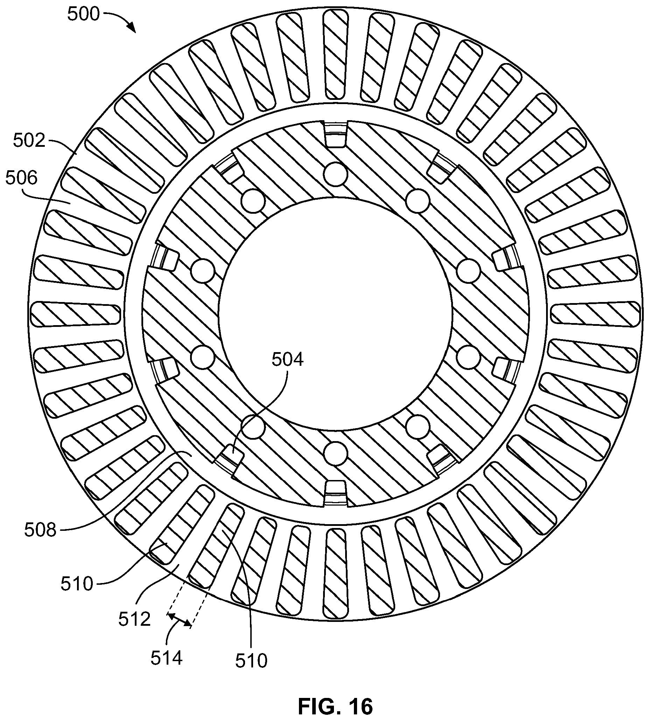

Regarding FIG. 16, a brake rotor 500 is provided that is similar in many respects to the brake rotors discussed above such that differences will be highlighted. The brake rotor 500 includes a body 502 having outboard air inlets 504, a braking portion 506, and an annular channel 508. The braking portion 506 includes vanes 510 that are separated by vents 512. The vanes 510 have a width 514 that is narrower than a corresponding width of the vanes 30 discussed above (see FIG. 10) which makes the vents 512 wider than vents 32. The wider vents 512 may facilitate manufacturing in some applications.

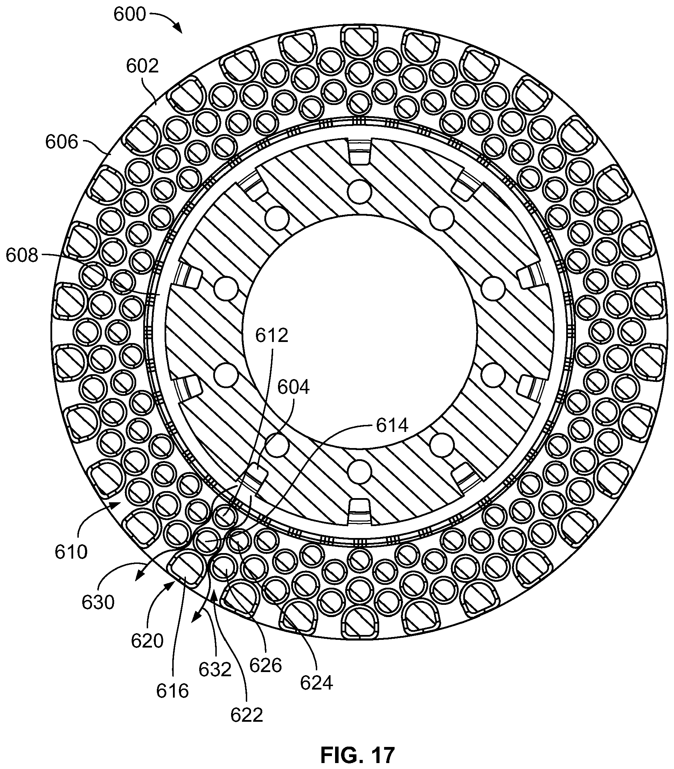

Regarding FIG. 17, a brake rotor 600 is shown that is similar in many respects to the brake rotors discussed above such that differences will be highlighted. The brake rotor 600 includes a body 602 having outboard air inlets 604, a braking portion 606, and an annular channel 608. The braking portion 606 includes pin vanes 610 that may have varying sizes about the brake rotor 600. In one embodiment, the pin vanes 610 include inner pin vanes 612, intermediate pin vanes 614, and outer pin vanes 616. Groupings of the pin vanes 612, 614, 616 may be aligned radially such as a first grouping 620 of pin vanes 610. The pin vanes 610 may include a second grouping 622 of radially aligned pin vanes 610 such as pin vanes 624, 626. The pin vanes 624, 626 are circumferentially offset from the pin vanes 612, 614, 620 so that the pin vanes 624, 626 may nest closely with the pin vanes 612, 614, 616. In one embodiment, the brake rotor 600 includes an alternating arrangement of pin vane groupings 620, 622 around the braking portion 606. The air flow that enters the brake rotor 600 via the outboard air inlets 604 and inboard air inlets may travel along paths 630, 632 around the pin vanes 610 before exiting the brake rotor 600. The nested pin vanes 610 may provide a large volume of brake rotor material between the inboard and outboard cheeks of the brake rotor 600 while providing a path for air to flow through the braking portions and cool the undersides of the cheeks. The pin vanes 610 between the cheeks of the brake rotor 600 resist crack propagation in the braking portion 606. The pin vanes 610 may also induce turbulence in airflow within the brake rotor 600 to improve heat transfer. In some applications, the pin vanes 610 may also be resistant to diminished cooling due to corrosion or debris clogging the vents because of the many pin vanes 610 and pathways through the pin vanes 610.

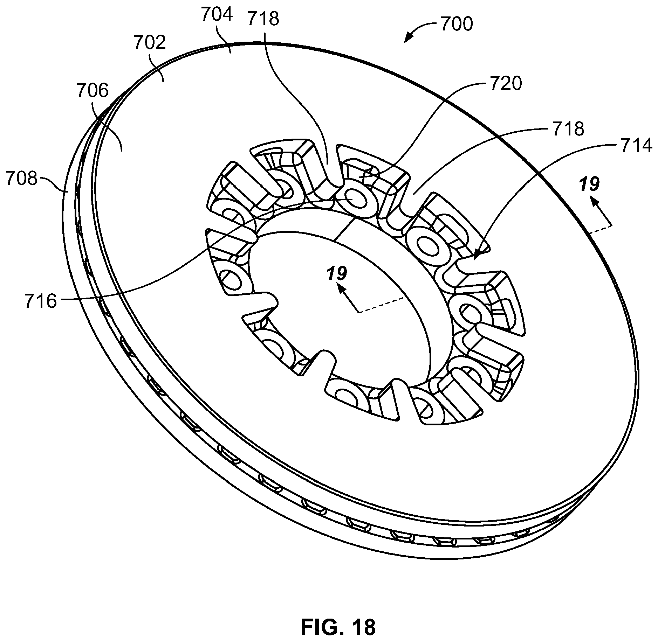

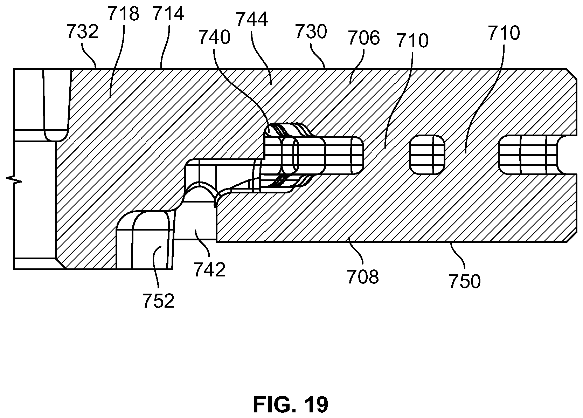

Regarding FIG. 18, a brake rotor 700 is provided that is similar to the brake rotors discussed above such that differences will be highlighted. The brake rotor 700 includes a body 702 having a braking portion 704 with an inboard braking portion 706 and an outboard braking portion 708. The braking portion 704 includes pin vanes 710 (see FIG. 19). The body 702 further includes a mounting flange 714 having through openings 716 to receive studs of a wheel hub and bosses 718 alternating with the through opening 716 about the mounting flange 714. The brake rotor 700 includes inboard air inlets 720 intermediate the bosses 718 about the brake rotor 700.

Regarding FIG. 19, the inboard braking portion 706 includes an inboard braking surface 730 that may be coplanar and contiguous with an upper surface 732 of the boss 718. In one embodiment, the surfaces 730, 732 are portions of a single flat surface. The body 702 includes a channel 740 that is in communication with the inboard air inlets 720 and the outboard air inlets 742. The body 702 includes inboard connector portions 744 connecting the mounting flange 714 to the inboard braking surface 730. Further, the body 702 includes an outboard braking surface 750 of the outboard braking portion 708 that may be spaced from a portion 752 of the mounting flange 714 by the outboard air inlet 742.

## Claims

1. A commercial vehicle brake rotor (12) comprising:
an annular body (16) having a central axis of rotation;
vents (32) of the annular body (16);
a braking portion (17) of the annular body (16) having an inboard braking surface (22) and an outboard braking surface (24);
a central mounting flange (40) of the annular body (16);
through openings (46) of the central mounting flange (40) to receive studs (52) of a wheel hub (16), the through openings (46) each having at least portion thereof extending axially intermediate the inboard and outboard braking surfaces (22, 24) of the annular body (16);
inboard air inlets (72) of the annular body (16) in communication with the vents (32);
outboard air inlets (120) of the annular body (16) in communication with the vents (32);
wherein the annular body (16) includes inboard connecting portions (160) connecting the inboard braking surface (22) to the central mounting flange (40);
wherein the annular body (16) includes outboard connecting portions (150) connecting the outboard braking surface (24) to the central mounting flange (40);
wherein the inboard and outboard connecting portions (160, 150) alternate about the annular body (16); and
wherein at least one of the inboard and outboard connecting portions (160, 150) has a first portion extending radially outward from the central mounting flange (40) and a second portion radially outward from the first portion extending transverse to the first portion.

2. The commercial vehicle brake rotor (12) of claim 1
wherein the braking portion (17) includes vanes (30); and
wherein the inboard and outboard connecting portions (160, 150) are each radially aligned with one or more of the vanes (30) of the annular body (16) and extend from the central mounting flange (40) toward the one or more vanes (30).

3. The commercial vehicle brake rotor (12) of claim 1 wherein the braking portion (17) comprises an inboard braking portion (18) including the inboard braking surface (22) and an outboard braking portion (20) including the outboard braking surface (24), the vents (32) axially intermediate the inboard and outboard braking portions (18, 20) ;
wherein the inboard and outboard connecting portions (160, 150) include first portions extending outboard from the inboard braking portion (160) and second portions extending inboard from the outboard braking portion (150); and
wherein the inboard and outboard connecting portions (160, 150) include radial connecting portions (161) connecting the central mounting flange (40) to the first and second portions of the inboard and outboard connecting portions (160, 150).

4. The commercial vehicle brake rotor (12) of claim 1
wherein the annular body (16) includes at least one outboard recess (171) axially aligned with ones of the inboard and outboard connecting portions (160, 150) so that the ones of the inboard and outboard connecting portions (160, 150) are recessed from the outboard braking surfaces (24), or
wherein the outboard connecting portions (150) are axially aligned with the inboard air inlets (72).

5. The commercial vehicle brake rotor (12) of claim 1
wherein the inboard connecting portions (160) are axially aligned with the outboard air inlets (120).

6. The commercial vehicle brake rotor (12) of claim 1 wherein the at least one of the inboard and outboard connecting portions (160, 150) includes an elbow portion (153) connecting the first and second portions.

7. The commercial vehicle brake rotor (12) of claim 1 wherein the through openings (46) of the central mounting flange (40) are radially aligned with one of the plurality of outboard air inlets (120) or the plurality of inboard air inlets (72); and
wherein the annular body (16) includes a plurality of step surfaces intermediate the through openings (46) and the one of the plurality of outboard air inlets (120) or the plurality of inboard air inlets (72).

8. The commercial vehicle brake rotor (12) of claim 1 wherein the inboard and outboard air inlets (72, 120) open to the central mounting flange (40).

9. A commercial vehicle brake rotor (12) comprising:
an annular body (16);
a central mounting portion (40) of the annular body (16);
a braking portion (17) of the annular body (16) radially outward of the central mounting portion (40), the braking portion (17) having an inboard braking surface (22) and an outboard braking surface (24);
vents (32) of the braking portion (17);
outboard air inlets (120) of the annular body (16) opening to the central mounting portion (40) and in communication with the vents (32);
inboard bosses (70) of the mounting portion (40);
inboard air inlets (72) of the annular body (16) alternating with the inboard bosses (70) about the annular body (16), the inboard air inlets (72) opening to the central mounting portion (40) and in communication with the vents (32);
wherein (i) the inboard and outboard air inlets (72, 120) alternate about the annular body (16), (ii) the annular body (16) is rotatable about an axis and the inboard bosses (70) are axially aligned with the outboard air inlets (120), or (iii) the inboard bosses (70) include ABS tone ring mounting bosses (70);
wherein the mounting portion (40) includes through openings (46) to receive studs (52) of a wheel hub (16); and
wherein the through openings (46) are radially aligned with the inboard air inlets (72) or the outboard air inlets (120).

10. The commercial vehicle brake rotor (12) of claim 9 wherein the inboard air inlets (72) each include an opening (94) and a groove (96) intermediate the opening (94) and one of the through openings (46) of the mounting portion (40).

11. The commercial vehicle brake rotor (12) of claim 9 wherein the central mounting portion (40) includes inboard surface portions (103B);
the braking portion (17) includes inboard arcuate sidewall portions extending between the inboard bosses (70) about the annular body (16); and
the annular body (16) includes radius portions connecting the inboard surface portions (103B) to the arcuate sidewall portions, optionally wherein the radius portions include a pair of radius portions on opposite sides of each of the inboard air inlets (72).

12. The commercial vehicle brake rotor (12) of claim 1 or 9 wherein the annular body (16) includes an internal channel connecting the inboard and outboard air inlets (72, 120) and the vents (32), optionally wherein the channel is radially intermediate the vanes (30) and the radial connecting portions (161).

13. A commercial vehicle wheel end assembly (10) comprising:
a wheel hub (14);
a plurality of studs (52) of the wheel hub (16);
a brake rotor (12) rotatable with the wheel hub (14) about an axis;
inboard and outboard braking surfaces (22, 24) of the brake rotor (12);
a central mounting portion (40) of the brake rotor (12) having a plurality of through openings (46) to receive the studs (52) of the wheel hub (14);
at least a portion of each of the through openings (46) extending axially intermediate the inboard and outboard braking surfaces (22, 24) of the brake rotor (12);
vents (32) of the brake rotor (12);
inboard air inlets (72) of the brake rotor (12) in communication with the vents (32);
outboard air inlets (120) of the brake rotor (12) in communication with the vents (32); and
wherein the inboard and outboard air inlets (72, 120) alternate about the brake rotor (12).

14. The commercial vehicle brake rotor (12) of any of claims 1 to 12 wherein the annular body (16) has a unitary, one-piece construction or the commercial vehicle wheel end assembly (10) of claim 13 wherein the brake rotor (12) has a unitary, one-piece construction.

## Patentansprüche

1. Nutzfahrzeugbremsrotor (12), umfassend:
einen ringförmigen Körper (16), der eine zentrale Rotationsachse aufweist;
Lüftungskanäle (32) des ringförmigen Körpers (16);
einen Bremsabschnitt (17) des ringförmigen Körpers (16), der eine innenseitige Bremsfläche (22) und eine außenseitige Bremsfläche (24) aufweist;
einen zentralen Montageflansch (40) des ringförmigen Körpers (16);
Durchgangsöffnungen (46) des zentralen Montageflanschs (40) zur Aufnahme von Stehbolzen (52) einer Radnabe (16), wobei die Durchgangsöffnungen (46) jeweils zumindest einen Abschnitt aufweisen, der sich axial zwischen der innenseitigen und der außenseitigen Bremsfläche (22, 24) des ringförmigen Körpers (16) erstreckt;
innenseitige Lufteinlässe (72) des ringförmigen Körpers (16), die mit den Lüftungskanälen (32) in Verbindung stehen;
außenseitige Lufteinlässe (120) des ringförmigen Körpers (16), die mit den Lüftungskanälen (32) in Verbindung stehen;
wobei der ringförmige Körper (16) innenseitige Verbindungsabschnitte (160) einschließt, die die innenseitige Bremsfläche (22) mit dem zentralen Montageflansch (40) verbinden;
wobei der ringförmige Körper (16) außenseitige Verbindungsabschnitte (150) einschließt, die die außenseitige Bremsfläche (24) mit dem zentralen Montageflansch (40) verbinden;
wobei die innenseitigen und außenseitigen Verbindungsabschnitte (160, 150) um den ringförmigen Körper (16) herum alternieren; und
wobei zumindest einer der innenseitigen und außenseitigen Verbindungsabschnitte (160, 150) einen ersten Abschnitt aufweist, der sich radial nach außen von dem zentralen Montageflansch (40) erstreckt, und einen zweiten Abschnitt, der sich radial nach außen von dem ersten Abschnitt erstreckt und quer zu dem ersten Abschnitt verläuft.

2. Nutzfahrzeugbremsrotor (12) nach Anspruch 1
wobei der Bremsabschnitt (17) Flügel (30) einschließt; und
wobei die innenseitigen und außenseitigen Verbindungsabschnitte (160, 150) jeweils mit einem oder mehreren der Flügel (30) des ringförmigen Körpers (16) radial ausgerichtet sind und sich von dem zentralen Montageflansch (40) zu dem einen oder den mehreren Flügeln (30) hin erstrecken.

3. Nutzfahrzeugbremsrotor (12) nach Anspruch 1, wobei der Bremsabschnitt (17) einen innenseitigen Bremsabschnitt (18) einschließlich der innenseitigen Bremsfläche (22) und einen außenseitigen Bremsabschnitt (20) einschließlich der außenseitigen Bremsfläche (24) umfasst, wobei die Lüftungskanäle (32) axial zwischen dem innenseitigen und dem außenseitigen Bremsabschnitt (18, 20) angeordnet sind;
wobei die innenseitigen und außenseitigen Verbindungsabschnitte (160, 150) erste Abschnitte einschließen, die sich von dem innenseitigen Bremsabschnitt (160) nach außen erstrecken, und zweite Abschnitte, die sich von dem außenseitigen Bremsabschnitt (150) nach innen erstrecken; und
wobei die innenseitigen und außenseitigen Verbindungsabschnitte (160, 150) radiale Verbindungsabschnitte (161) einschließen, die den zentralen Montageflansch (40) mit den ersten und zweiten Abschnitten der innenseitigen und außenseitigen Verbindungsabschnitte (160, 150) verbinden.

4. Nutzfahrzeugbremsrotor (12) nach Anspruch 1
wobei der ringförmige Körper (16) zumindest eine außenseitige Ausnehmung (171) einschließt, die mit einigen der innenseitigen und außenseitigen Verbindungsabschnitte (160, 150) axial ausgerichtet ist, so dass die einigen der innenseitigen und außenseitigen Verbindungsabschnitte (160, 150) gegenüber den außenseitigen Bremsflächen (24) zurückgesetzt sind, oder
wobei die außenseitigen Verbindungsabschnitte (150) mit den innenseitigen Lufteinlässen (72) axial ausgerichtet sind.

5. Nutzfahrzeugbremsrotor (12) nach Anspruch 1
wobei die innenseitigen Verbindungsabschnitte (160) mit den außenseitigen Lufteinlässen (120) axial ausgerichtet sind.

6. Nutzfahrzeugbremsrotor (12) nach Anspruch 1, wobei der zumindest eine der innenseitigen und außenseitigen Verbindungsabschnitte (160, 150) einen Winkelabschnitt (153) einschließt, der den ersten und den zweiten Abschnitt verbindet.

7. Nutzfahrzeugbremsrotor (12) nach Anspruch 1, wobei die Durchgangsöffnungen (46) des zentralen Montageflanschs (40) mit einem der Vielzahl von außenseitigen Lufteinlässen (120) oder der Vielzahl von innenseitigen Lufteinlässen (72) radial ausgerichtet sind; und
wobei der ringförmige Körper (16) eine Vielzahl von Stufenflächen zwischen den Durchgangsöffnungen (46) und dem einen der Vielzahl von außenseitigen Lufteinlässen (120) oder der Vielzahl von innenseitigen Lufteinlässen (72) einschließt.

8. Nutzfahrzeugbremsrotor (12) nach Anspruch 1, wobei die innenseitigen und außenseitigen Lufteinlässe (72, 120) zu dem zentralen Montageflansch (40) hin offen sind.

9. Nutzfahrzeugbremsrotor (12), umfassend:
einen ringförmigen Körper (16);
einen zentralen Montageabschnitt (40) des ringförmigen Körpers (16);
einen Bremsabschnitt (17) des ringförmigen Körpers (16) radial außerhalb des zentralen Montageabschnitts (40), wobei der Bremsabschnitt (17) eine innenseitige Bremsfläche (22) und eine außenseitige Bremsfläche (24) aufweist;
Lüftungskanäle (32) des Bremsabschnitts (17);
außenseitige Lufteinlässe (120) des ringförmigen Körpers (16), die zu dem zentralen Montageabschnitt (40) hin offen sind und mit den Lüftungskanälen (32) in Verbindung stehen;
innenseitige Vorsprünge (70) des Montageabschnitts (40);
innenseitige Lufteinlässe (72) des ringförmigen Körpers (16), die mit den innenseitigen Vorsprüngen (70) um den ringförmigen Körper (16) herum alternieren, wobei die innenseitigen Lufteinlässe (72) zu dem zentralen Montageabschnitt (40) hin offen sind und mit den Lüftungskanälen (32) in Verbindung stehen;
wobei (i) die innenseitigen und außenseitigen Lufteinlässe (72, 120) um den ringförmigen Körper (16) herum alternieren, (ii) der ringförmige Körper (16) um eine Achse drehbar ist und die innenseitigen Vorsprünge (70) mit den außenseitigen Lufteinlässen (120) axial ausgerichtet sind, oder (iii) die innenseitigen Vorsprünge (70) ABS-Impulsring-Befestigungsvorsprünge (70) einschließen;
wobei der Montageabschnitt (40) Durchgangsöffnungen (46) einschließt, um Stehbolzen (52) einer Radnabe (16) aufzunehmen; und
wobei die Durchgangsöffnungen (46) mit den innenseitigen Lufteinlässen (72) oder den außenseitigen Lufteinlässen (120) radial ausgerichtet sind.

10. Nutzfahrzeugbremsrotor (12) nach Anspruch 9, wobei die innenseitigen Lufteinlässe (72) jeweils eine Öffnung (94) und eine Nut (96) zwischen der Öffnung (94) und einer der Durchgangsöffnungen (46) des Montageabschnitts (40) einschließen.

11. Nutzfahrzeugbremsrotor (12) nach Anspruch 9, wobei der zentrale Montageabschnitt (40) innenseitige Oberflächenabschnitte (103B) einschließt;
der Bremsabschnitt (17) innenseitige bogenförmige Seitenwandabschnitte einschließt, die sich zwischen den innenseitigen Vorsprüngen (70) um den ringförmigen Körper (16) herum erstrecken; und
der ringförmige Körper (16) Radiusabschnitte einschließt, die die innenseitigen Oberflächenabschnitte (103B) mit den bogenförmigen Seitenwandabschnitten verbinden, wobei die Radiusabschnitte wahlweise ein Paar von Radiusabschnitten auf gegenüberliegenden Seiten jedes der innenseitigen Lufteinlässe (72) einschließen.

12. Nutzfahrzeugbremsrotor (12) nach Anspruch 1 oder 9, wobei der ringförmige Körper (16) einen inneren Kanal einschließt, der die innenseitigen und außenseitigen Lufteinlässe (72, 120) und die Lüftungskanäle (32) verbindet, wobei der Kanal wahlweise radial zwischen den Flügeln (30) und den radialen Verbindungsabschnitten (161) angeordnet ist.

13. Nutzfahrzeug-Radendanordnung (10), umfassend:
eine Radnabe (14);
eine Vielzahl von Stehbolzen (52) der Radnabe (16);
einen Bremsrotor (12), der mit der Radnabe (14) um eine Achse drehbar ist;
innenseitige und außenseitige Bremsflächen (22, 24) des Bremsrotors (12);
einen zentralen Montageabschnitt (40) des Bremsrotors (12), der eine Vielzahl von Durchgangsöffnungen (46) zur Aufnahme der Stehbolzen (52) der Radnabe (14) aufweist;
wobei sich zumindest ein Abschnitt jeder der Durchgangsöffnungen (46) axial zwischen der innenseitigen und der außenseitigen Bremsfläche (22, 24) des Bremsrotors (12) erstreckt;
Lüftungskanäle (32) des Bremsrotors (12);
innenseitige Lufteinlässe (72) des Bremsrotors (12), die mit den Lüftungskanälen (32) in Verbindung stehen;
außenseitige Lufteinlässe (120) des Bremsrotors (12), die mit den Lüftungskanälen (32) in Verbindung stehen; und
wobei die innenseitigen und außenseitigen Lufteinlässe (72, 120) um den Bremsrotor (12) herum alternieren.

14. Nutzfahrzeugbremsrotor (12) nach einem der Ansprüche 1 bis 12, wobei der ringförmige Körper (16) eine einstückige, einteilige Konstruktion aufweist, oder Nutzfahrzeug-Radendanordnung (10) nach Anspruch 13, wobei der Bremsrotor (12) eine einstückige, einteilige Konstruktion aufweist.

## Revendications

1. Disque de frein (12) de véhicule utilitaire comprenant :
un corps annulaire (16) présentant un axe central de rotation ;
des évents (32) du corps annulaire (16) ;
une partie de freinage (17) du corps annulaire (16) présentant une surface (22) de freinage intérieure et une surface (24) de freinage extérieure ;
une bride de montage (40) centrale du corps annulaire (16) ;
des ouvertures traversantes (46) de la bride de montage (40) centrale destinées à recevoir des goujons (52) d'un moyeu de roue (16), les ouvertures traversantes (46) présentant chacune au moins une partie de celles-ci s'étendant axialement de manière intermédiaire entre les surfaces (22, 24) de freinage intérieure et extérieure du corps annulaire (16) ;
des entrées d'air intérieures (72) du corps annulaire (16) en communication avec les évents (32) ;
des entrées d'air extérieures (120) du corps annulaire (16) en communication avec les évents (32) ;
dans lequel le corps annulaire (16) inclut des parties (160) de liaison intérieures reliant la surface (22) de freinage intérieure à la bride de montage (40) centrale ;
dans lequel le corps annulaire (16) inclut des parties (150) de liaison extérieures reliant la surface (24) de freinage extérieure à la bride de montage (40) centrale ;
dans lequel les parties (160, 150) de liaison intérieures et extérieures alternent autour du corps annulaire (16) ; et
dans lequel au moins l'une des parties (160, 150) de liaison intérieures et extérieures présente une première partie s'étendant radialement vers l'extérieur à partir de la bride de montage (40) centrale et une deuxième partie radialement vers l'extérieur à partir de la première partie s'étendant transversalement par rapport à la première partie.

2. Disque de frein (12) de véhicule utilitaire selon la revendication 1,
dans lequel la partie de freinage (17) inclut des ailettes (30) ; et
dans lequel les parties (160, 150) de liaison intérieures et extérieures sont chacune alignées radialement avec une ou plusieurs des ailettes (30) du corps annulaire (16) et s'étendent depuis la bride de montage (40) centrale vers la une ou les plusieurs ailettes (30).

3. Disque de frein (12) de véhicule utilitaire selon la revendication 1, dans lequel la partie de freinage (17) comprend une partie (18) de freinage intérieure incluant la surface (22) de freinage intérieure et une partie (20) de freinage extérieure incluant la surface (24) de freinage extérieure, les évents (32) étant axialement intermédiaires entre les parties (18, 20) de freinage intérieure et extérieure ;
dans lequel les parties (160, 150) de liaison intérieures et extérieures incluent des premières parties s'étendant vers l'extérieur depuis la partie (160) de freinage intérieure et des deuxièmes parties s'étendant vers l'intérieur depuis la partie (150) de freinage extérieure ; et
dans lequel les parties (160, 150) de liaison intérieures et extérieures incluent des parties (161) de liaison radiales, reliant la bride de montage (40) centrale aux premières et deuxièmes parties des parties (160, 150) de liaison intérieures et extérieures.

4. Disque de frein (12) de véhicule utilitaire selon la revendication 1
dans lequel le corps annulaire (16) inclut au moins un évidement extérieur (171) aligné axialement avec ceux des parties (160, 150) de liaison intérieures et extérieures, de sorte que ceux des parties (160, 150) de liaison intérieures et extérieures soient en retrait par rapport aux surfaces (24) de freinage extérieures , ou
dans lequel les parties (150) de liaison extérieures sont alignées axialement avec les entrées d'air intérieures (72).

5. Disque de frein (12) de véhicule utilitaire selon la revendication 1,
dans lequel les parties (160) de liaison intérieures sont alignées axialement avec les entrées d'air extérieures (120).

6. Disque de frein (12) de véhicule utilitaire selon la revendication 1, dans lequel la au moins une des parties (160, 150) de liaison intérieures et extérieures inclut une partie coudée (153) reliant les première et deuxième parties.

7. Disque de frein (12) de véhicule utilitaire selon la revendication 1, dans lequel les ouvertures traversantes (46) de la bride de montage (40) centrale sont alignées radialement avec l'une de la pluralité d'entrées d'air extérieures (120) ou de la pluralité d'entrées d'air intérieures (72) ; et
dans lequel le corps annulaire (16) inclut une pluralité de surfaces en gradin intermédiaires entre les ouvertures traversantes (46) et la une de la pluralité d'entrées d'air extérieures (120) ou de la pluralité d'entrées d'air intérieures (72).

8. Disque de frein (12) de véhicule utilitaire selon la revendication 1, dans lequel les entrées d'air intérieures et extérieures (72, 120) s'ouvrent sur la bride de montage (40) centrale.

9. Disque de frein (12) de véhicule utilitaire comprenant :
un corps annulaire (16) ;
une partie de montage (40) centrale du corps annulaire (16) ;
une partie de freinage (17) du corps annulaire (16) radialement vers l'extérieur de la partie de montage (40) centrale, la partie de freinage (17) présentant une surface (22) de freinage intérieure et une surface (24) de freinage extérieure ;
des évents (32) de la partie de freinage (17) ;
des entrées d'air extérieures (120) du corps annulaire (16) s'ouvrant sur la partie de montage (40) centrale et en communication avec les évents (32) ;
des bossages intérieurs (70) de la partie de montage (40) ;
des entrées d'air intérieures (72) du corps annulaire (16) alternant avec les bossages intérieurs (70) autour du corps annulaire (16), les entrées d'air intérieures (72) s'ouvrant sur la partie de montage (40) centrale et en communication avec les évents (32) ;
dans lequel (i) les entrées d'air intérieures et extérieures (72, 120) alternent autour du corps annulaire (16), (ii) le corps annulaire (16) est rotatif autour d'un axe et les bossages intérieurs (70) sont alignés axialement avec les entrées d'air extérieures (120), ou (iii) les bossages intérieurs (70) incluent des bossages (70) de montage de couronne dentée ABS ;
dans lequel la partie de montage (40) inclut des ouvertures traversantes (46) destinées à recevoir des goujons (52) d'un moyeu de roue (16) ; et
dans lequel les ouvertures traversantes (46) sont alignées radialement avec les entrées d'air intérieures (72) ou les entrées d'air extérieures (120).

10. Disque de frein (12) de véhicule utilitaire selon la revendication 9, dans lequel les entrées d'air intérieures (72) incluent chacune une ouverture (94) et une rainure (96) intermédiaire entre l'ouverture (94) et l'une des ouvertures traversantes (46) de la partie de montage (40).

11. Disque de frein (12) de véhicule utilitaire selon la revendication 9, dans lequel la partie de montage (40) centrale inclut des parties de surface intérieures (103B) ;
la partie de freinage (17) inclut des parties de paroi latérale arquées intérieures s'étendant entre les bossages intérieurs (70) autour du corps annulaire (16) ; et
le corps annulaire (16) inclut des parties de rayon reliant les parties de surface intérieures (103B) aux parties de paroi latérale arquées ; éventuellement dans lequel les parties de rayon incluent une paire de parties de rayon sur des côtés opposés de chacune des entrées d'air intérieures (72).

12. Disque de frein (12) de véhicule utilitaire selon la revendication 1 ou la revendication 9, dans lequel le corps annulaire (16) inclut un canal interne reliant les entrées d'air intérieures et extérieures (72, 120) et les évents (32), éventuellement dans lequel le canal est radialement intermédiaire entre les ailettes (30) et les parties (161) de liaison radiales.

13. Ensemble (10) d'extrémité de roue de véhicule utilitaire comprenant :
un moyeu de roue (14) ;
une pluralité de goujons (52) du moyeu de roue (16) ;
un disque de frein (12) rotatif avec le moyeu de roue (14) autour d'un axe ;
des surfaces (22, 24) de freinage intérieures et extérieures du disque de frein (12) ;
une partie de montage (40) centrale du disque de frein (12) présentant une pluralité d'ouvertures traversantes (46) destinées à recevoir les goujons (52) du moyeu de roue (14) ;
au moins une partie de chacune des ouvertures traversantes (46) s'étendant axialement de manière intermédiaire entre les surfaces (22, 24) de freinage intérieures et extérieures du disque de frein (12) ;
des évents (32) du disque de frein (12) ;
des entrées d'air intérieures (72) du disque de frein (12) en communication avec les évents (32) ;
des entrées d'air extérieures (120) du disque de frein (12) en communication avec les évents (32) ; et
dans lequel les entrées d'air intérieures et extérieures (72, 120) alternent autour du disque de frein (12).

14. Disque de frein (12) de véhicule utilitaire selon l'une quelconque des revendications 1 à 12, dans lequel le corps annulaire (16) présente une construction monobloc, ou ensemble (10) d'extrémité de roue de véhicule utilitaire selon la revendication 13, dans lequel le disque de frein (12) présente une construction monobloc.
